# EUROPEAN PATENT SPECIFICATION

(11) **EP 3 174 227 B1**
(45) Date of publication and mention of the grant of the patent: **08.01.2020**
(21) Application number: 15306877.0
(22) Date of filing: 26.11.2015
(51) Int. Cl.: H04J 14/02

(54) **AN OPTICAL NODE FOR MANAGING OPTICAL SIGNALS ON MAIN AND PROTECTIVE LIGTHPATHS**
OPTISCHER KNOTEN ZUR VERWALTUNG OPTISCHER SIGNALE AUF HAUPT- UND SCHUTZLICHTPFADEN
NOEUD OPTIQUE PERMETTANT DE GÉRER DES SIGNAUX OPTIQUES SUR DES TRAJETS DE LUMIÈRE PRINCIPAUX ET PROTECTEURS

(43) Date of publication of application: 31.05.2017
(73) Proprietor: Alcatel Lucent, 91620 Nozay (FR)
(72) Inventor: LAYEC, Patricia, 91620 NOZAY (FR); ANTONA, Jean-Christophe, 91620 NOZAY (FR); BISSON, Arnaud, 91620 NOZAY (FR)
(74) Representative: Nokia EPO representatives

(56) References cited:
- EP-A1- 2 385 642
- CN-B- 102 347 862
- US-B1- 6 567 194

## Description

### FIELD OF THE INVENTION

The present invention relates to optical communication network.

### BACKGROUND OF THE INVENTION

The realm of telecommunication has evolved drastically for the last decades, driven by new technologies and new habits of consumers. Communication networks have evolved to match the never ending increase of content request. Optical communication networks are key elements to sustain higher rate of content deliveries.

In order to avoid full outage of services, usually an optical network made of meshed optical network elements is protected from failures at the optical layer with mechanisms such as 1+1 protection or M:N shared protection. In such protection schemes, dedicated optical resources are systematically allotted to failure mitigation, in particular to maintain the optical network in a fully functional state in the worst case scenario. These precautions lead to a non optimal usage of optical resources, as those are unused in case of normal operation, but are ready to transport the data traffic in case an optical link suffers a breakage for example. These constraints do not help in the design of flex-grid optical networks in which flexibility of interconnection and allocation of resources are key drivers.

The difficulty of designing flex-grid like optical networks is even more complex with existing protection solutions. For example in Optical Subnetwork Connection Protection (OSNCP) like schemes, two transponders with two optical modulators are involved in the protection mechanism, leading to an equipment redundancy which impacts flex-grid ability and also Capital Expenditures (CAPEX) and Operational Expenditures (OPEX). In Optical channel (OCh) shared protection like schemes, a single transponder is shared between a normal lightpath of operation and a protective lightpath of operation. It leads to an additional constraint on the used carrier wavelength which has to be the same on the two lightpaths, rendering such scheme non flex-grid friendly. These drawbacks combined with the equal consumption of spectrum for the normal lightpath and the protective lightpath render inefficient the existing solutions.

A solution compatible with flex-grid requisite and consuming less optical resources than existing protections is then needed. Additionally said solution has to take into consideration CAPEX and OPEX. EP2385642 A1 discloses a modulated tunable laser to be used for either a working path or a protection path.

### SUMMARY OF THE INVENTION

The invention aims to remedy all or some of the disadvantages of the above identified prior art. It particularly proposes ways for an optical node to manage efficiently optical signals to be conveyed on a main lightpath and/or on a protective lightpath.

A first aspect of the invention relates then to an optical node for managing optical signals, said optical node being connected to a main lightpath and to a protection lightpath, said protection lightpath being an alternate optical path in case of a failure event on the main lightpath, the optical node transmitting an output optical signal on a first carrier wavelength on the main optical path, said optical node comprising:
- a first carrier wavelength selector device being provided with a first carrier signal on the first carrier wavelength and with a second carrier signal on a second carrier wavelength, said first carrier wavelength and said second carrier wavelength being different carrier wavelengths, and adapted for outputting a selected optical signal, said selected optical signal resulting from the selection of the first carrier signal or from the selection of the second carrier signal,
- an optical modulator device for performing the modulation of a transmit informative signal with the selected optical signal, said transmit informative signal comprising first informative data, said modulation resulting into the output optical signal,
and in case of a failure event on the main lightpath, the optical node being adapted for :
- configuring the first carrier wavelength selector device for selecting the second carrier signal for outputting the selected optical signal to be provided to the optical modulator device,
- transmitting the output optical signal on the protection lightpath, said output optical signal resulting from the modulation performed by the optical modulator device.

Thus, thanks to these features, the optical node is enabled to transmit the output optical signal carried on the first carrier wavelength on the main lightpath in case of normal operation. In case of a failure event the optical node is enabled to configure the first carrier wavelength selector device for selecting the second carrier wavelength and to transmit the output optical signal carried on the second carrier wavelength on the protective lightpath. The optical node advantageously is adapted to switch from the first carrier wavelength to the second carrier wavelength in such way to provide no or minimum service disruption. The optical node advantageously comprises a single optical modulator device able to generate optical signals for operating either the main lightpath or the protective lightpath. The use of a single optical modulator is beneficial in terms of cost. Therefore the optical node is particularly adapted to manage flex-grid optical networks in which resources allocated between main and protective lightpath is crucial and requires flexibility.

According to various embodiments, such optical node comprises one or more of the features below, which should be considered in any possible technical combinations:
- the optical node comprises a digital client device being adapted for outputting the transmit informative signal comprised in a first spectrum bandwidth chosen according to an optical capacity of the main lightpath, and in case of a failure event on the main lightpath, the optical node being further adapted for configuring the digital client device for adapting the transmit informative signal to a second spectrum bandwidth chosen according to an optical capacity of the protection lightpath,
- the optical node receives an input optical signal on the main lightpath, said input optical signal being conveyed on a third carrier wavelength, said optical node further comprises an optical demodulator device for performing the demodulation of the input optical signal and for outputting a receive informative signal, and in case of a failure event on the main lightpath the optical node being adapted for receiving the input optical signal on the protection lightpath,
- the optical node further comprises:
   ∘ a second carrier wavelength selector device being provided with a first synchronization signal locked on the third carrier wavelength and with a second synchronization signal locked on a fourth carrier wavelength, said third carrier wavelength and fourth carrier wavelength being different carrier wavelengths, and adapted for outputting a selected synchronization signal, said selected synchronization signal resulting from the selection of the first synchronization signal or from the selection of the second synchronization signal,
   ∘ the optical demodulator device for performing the demodulation synchronized with the selected synchronization signal provided by the second carrier wavelength selector device.
   and in case of a failure event on the main lightpath the optical node being adapted for:
   ∘ configuring the second carrier wavelength selector device for selecting the second synchronization signal for outputting the selected synchronization signal,
   ∘ configuring the optical demodulator device for synchronizing on the selected synchronization signal,
   ∘ receiving the input optical signal on the protection lightpath,
- the optical demodulator is adapted for outputting the receive informative signal comprised in a third spectrum bandwidth chosen according to the optical capacity of the main lightpath, and in case of a failure event on the main lightpath, said optical node being further adapted for configuring the optical demodulator for demodulating the receive informative signal being comprised in a fourth spectrum bandwidth chosen according to the optical capacity of the protection lightpath,
- the second carrier wavelength selector device is selected from the group of devices consisting of an optical switch comprising two inputs and one output, and an optical line comprising one input and one output,
- the optical node wherein:
   ∘ the first carrier wavelength selector device is selected from the group of devices consisting of an optical switch comprising two inputs and one input, an optical coupler comprising two inputs and one input, an optical line comprising one input and one output, and a wavelength selective switching device comprising two inputs and one input,
   ∘ the first carrier wavelength selector device is an optical switch comprising two inputs and two outputs, one output outputting the selected optical signal, the other output outputting an unselected optical signal resulting from the non selection of the first carrier signal or from the non selection of the second carrier signal,
   ∘ said optical node further comprising a first other optical switch comprising two inputs and two outputs, one input being provided with the output optical signal, the other input being provided with the unselected optical signal, one output outputting a main output optical signal, the other outputting a protective output optical signal,
   and in case of a failure event on the main lightpath the optical node being adapted for:
   ∘ configuring the first other optical switch so that the main output optical signal corresponds to the unselected optical signal, and so that the protective output optical signal corresponds to the output optical signal,
   ∘ transmitting the main output optical signal on the main optical path,
   ∘ transmitting the protective output optical signal on the protective optical path,
- the optical node wherein:
   ∘ the second carrier wavelength selector device is an optical switch comprising two inputs and one input,
   ∘ said optical node further comprising a second other optical switch comprising two inputs and one output, one of said inputs being provided with a main input optical signal received on the main optical path, the other of said inputs being provided with a protective input optical signal, said output outputting a selected receive optical signal, the selected receive optical signal resulting from the selection of the main input optical signal or from the selection of the protective input optical signal,
   and in case of a failure event on the main lightpath the optical node being adapted for:
   ∘ configuring the second other optical switch for selecting the protective input optical signal for outputting the selected receive optical signal,
- the first carrier wavelength corresponds to the third carrier wavelength, and the second carrier wavelength corresponds to the fourth carrier wavelength.

Thus, thanks to these features, the optical node is enabled to receive the input optical signal carried on the third carrier wavelength on the main lightpath in case of normal operation. In case of a failure event the optical node is enabled to configure the second carrier wavelength selector device for selecting the fourth carrier wavelength and to receive the input optical signal carried on the fourth carrier wavelength on the protective lightpath. The optical node advantageously is adapted to switch from the third carrier wavelength to the fourth carrier wavelength in such way to provide no or minimum service disruption. The optical node advantageously comprises a single optical demodulator device able to process optical signals for operating either on the main lightpath or on the protective lightpath. The use of a single optical demodulator is beneficial in terms of cost. Therefore the optical node is particularly adapted to manage flex-grid optical networks in which resources allocated between main and protective lightpath is crucial and requires flexibility.

### BRIEF DESCRIPTION OF THE FIGURES

Some embodiments of the present invention are now described, by way of example only, and with reference to the accompanying drawings, in which:
- FIG. 1 is a schematic block diagram of an optical network,
- FIG. 2 is a schematic block diagram of optical resources available in an optical network,
- FIG. 3 is a schematic block diagram of an optical transmitter according to an embodiment of the invention,
- FIG. 4a is a schematic block diagram of a first carrier wavelength selector device node according to an embodiment of the invention,
- FIG. 4b is another schematic block diagram of a first carrier wavelength selector device node according to an embodiment of the invention,
- FIG. 4c is another schematic block diagram of a first carrier wavelength selector device node according to an embodiment of the invention,
- FIG. 5a is a schematic block diagram of an optical receiver according to an embodiment of the invention,
- FIG. 5b is another schematic block diagram of an optical receiver according to an embodiment of the invention,
- FIG. 6a is a schematic block diagram of a second carrier wavelength selector device according to an embodiment of the invention,
- FIG. 6b is another schematic block diagram of a second carrier wavelength selector device according to an embodiment of the invention,
- FIG. 7 is another schematic block diagram of an optical transmitter according to an embodiment of the invention,
- FIG. 8 is another schematic block diagram of an optical receiver according to an embodiment of the invention,
- FIG. 9 is a schematic block diagram of optical resources available in an optical network according an embodiment of the invention.

The same reference number represents the same element to the same type of element on all drawings, unless stated otherwise.

### DESCRIPTION OF EMBODIMENTS

The figures and the following description illustrate a specific exemplary embodiment of the invention. It will thus be appreciated that those skilled in the art will be able to devise various arrangements that, although not explicitly described or shown herein, embody the principles of the invention and are included within the scope of the invention. Furthermore, any example described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

In the following description of the figures, the elements designated with arrows are depicting either optical signals carried on waveguides or electrical signals carried on wired connections. The orientations of the arrows symbolize the propagation direction of the optical and/or electrical signals. Such schematic representations are non limiting and serve only for the understanding of the embodiments.

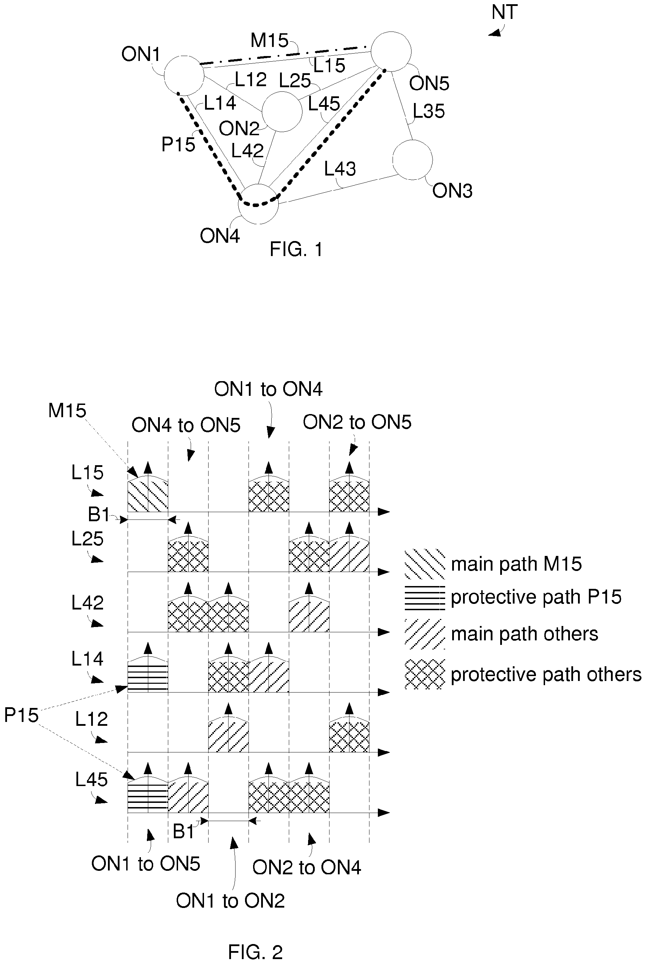

Referring to figure **FIG. 1**, a schematic block diagram of an optical network according to an embodiment of the invention is depicted.

In an embodiment, a simplified representation of an optical network NT is schematized in figure FIG. 1. The depiction of the optical network NT applies for existing optical networks as well as an optical network according to embodiments.

The optical network NT is a mesh of optical equipments. The optical network NT comprises a first optical node ON1, a second optical node ON2, a third optical node ON3, a fourth optical node ON4 and a fifth optical node ON5. These optical nodes are interacting together according to the following connections:
- the first optical node ON1 and the fifth optical node ON5 are connected through an optical link L15,
- the first optical node ON1 and the fourth optical node ON4 are connected through an optical link L14,
- the first optical node ON1 and the second optical node ON2 are connected through an optical link L12,
- the second optical node ON2 and the fifth optical node ON5 are connected through an optical link L25,
- the second optical node ON2 and the fourth optical node ON4 are connected through an optical link L42,
- the fourth optical node ON4 and the fifth optical node ON5 are connected through an optical link L45,
- the fourth optical node ON4 and the third optical node ON3 are connected through an optical link L43,
- the fifth optical node ON5 and the third optical node ON3 are connected through an optical link L35.

In an example, an optical node such as the first optical node ON1, the second optical node ON2 and the others depicted optical nodes are equipments enabled to transmit and receive optical signals conveyed on optical links such as the optical link L15 or others depicted optical links. An optical node such as the first optical node ON1 is an ingress point for data to be transmitted on the optical network NT and an egress point for data conveyed on the optical network NT and having the first optical node ON1 as a destination point.

In an example, the optical network NT is an optical packet switching network and the optical nodes it comprises are adapted to process optical packets. One example of optical packet switching network is an optical slot switching network in which an optical packet is characterized by a time slot and a carrier frequency.

In an example, the optical links, such as the optical link L15, the optical link L25 and others optical links from the optical network NT, are optical connections enabled to convey data through optical signals managed by optical nodes from said optical network NT.

In an example such optical links are optical waveguides such as optical fibers enabled to support multiple carrier wavelength, either being unidirectional waveguides or being bidirectional waveguides.

It should be noted that in order to ease the understanding of the functioning of the optical network NT, its topology has been simplified to five optical nodes and to eight optical links. However there can be much more optical nodes and optical links in real-life optical networks. The embodiments hereinafter, applicable to large optical networks, are not limited to five optical nodes and eight optical links.

In the optical network NT, data path can be defined between optical nodes. The optical nodes can be intermediate nodes from the data path or can be endpoints of the data path. Such data path for conveying data content from a source optical node to a destination optical node will be referred hereinafter as lightpath.

The optical network NT comprises a main lightpath M15 that defines a data path between the first optical node ON1 and the fifth optical node ON5. Since said optical nodes are neighbors, the main lightpath M15 and the optical link L15 are identical. In another example of an optical network, the main lightpath M15 could traverse intermediate optical nodes located in between the first optical node ON1 and the fifth optical node ON5.

The optical network NT comprises a protective lightpath P15 that defines a data path between the first optical node ON1 and the fifth optical node ON5, through the fourth optical node ON4. Said protective lightpath P15 is the protection lightpath of the main lightpath M15. In case the main lightpath M15 suffers from an outage, the optical network routes the data initially conveyed by the main lightpath M15 trough the protective lightpath P15.

The protective lightpath P15 comprises the optical link L14 between the first optical node ON1 and the fourth optical node ON4. The fourth optical node ON4 is comprised in the protective lightpath P15 as an intermediate optical node. The protective lightpath P15 further comprises the optical link L45 between the fourth optical node ON4 and the fifth optical node ON5.

In existing protection mechanisms, the optical capacity of the main lightpath determines the optical capacity of the protective lightpath. For example, the main lightpath M15 is tailored to convey data at an end to end rate of 100 Gb/s, with 30 Gb/s rate dedicated to premium class traffic and 70 Gb/s rate dedicated to best effort class traffic. Accordingly the sustainable end to end rate of the protective lightpath P15 is 100 Gb/s which makes is possible to convey the premium class traffic and the best effort class traffic when the main lightpath M15 is defective. The optical capacity of the protective lightpath P15 is reserved and cannot be used by other regular lightpaths that have in common the optical links L14 and L45 comprised in the protective lightpath. This over-provisioning situation is not optimal as will be depicted in figure FIG. 2.

On the contrary, present embodiments allow an optimal use of optical resources as will be described hereinafter.

Referring to figure FIG. 2, a schematic block diagram of optical resources available in an optical network is depicted.

Figure FIG. 2 provides a schematized grid of optical resources from the optical network NT using existing protection mechanisms.

On the y-axis, each line corresponds to each of the optical links comprised in the optical network NT. On the x-axis of each line, optical spectrums assigned to corresponding optical link are represented. In the context of figure FIG. 2, an optical spectrum is defined by a central frequency or frequency of a carrier wavelength depicted by an upward vertical arrow and a spectrum bandwidth centered on the frequency of the carrier wavelength. The optical spectrums from the optical resources grid have a first spectrum bandwidth B1. Said first spectrum bandwidth B1 is chosen according to the optical capacity of the main lightpath M15. In an example the first spectrum bandwidth B1 is determined as a function of the volume of the premium class data traffic and the volume of the best effort class data traffic that are to be conveyed on the main lightpath M15. In such case, between 0% and 30% from the first spectrum bandwidth B1 may be allocated to premium traffic, and between 70% and 100% from the first spectrum bandwidth B1 may be allocated to best effort traffic. Other repartition between classes of traffic are also possible, and other kind of class of traffic may be also assigned with portions the from the first spectrum bandwidth B1.

The optical resources from the grid are assigned in function of the available principal lightpaths and the backup lightpaths from the optical network NT. For simplification purpose, each principal lightpath such as the main lightpath M15 corresponds to an optical link, and each backup lightpath such as the protective lightpath P15 comprises two optical links jointed by an optical node.

The first raw marked as "ON1 to ON5" on the left of figure FIG. 2 corresponds to the lightpaths from the first optical node ON1 to the fifth optical node ON5, namely the main lightpath M15 and the protective lightpath P15. Optical spectrum assigned to the main lightpath M15 is identified on figure FIG. 2 with oblique hatching descending from the left to the right. Optical spectrums assigned to the protective lightpath P15 is identified on figure FIG. 2 with horizontal hatching. The optical spectrums from the protective lightpath P15 is made of a first optical spectrum assigned on the optical link L14 and of a second optical spectrum assigned on the optical link L45.

Other main lightpaths and other protective lightpaths are also depicted on figure FIG. 2. The other main paths from the optical network NT are assigned optical spectrum that are identified on figure FIG.2 with oblique hatching ascending from left to right, and optical spectrums assigned to other protective lightpaths are identified on figure FIG.2 with crossed hatching. The other main lightpaths and other protective lightpaths are organized as follow:
- the second row "ON4 to ON5" from the left of figure FIG.2 depicts a principal lightpath between the fourth optical node ON4 and the fifth optical node ON5 carried on the optical link L45, with a protective lightpath comprising the optical link L25 and the optical link L42,
- the third row "ON1 to ON2" from the left of figure FIG.2 depicts a principal lightpath between the first optical node ON1 and the second optical node ON2 carried on the optical link L12, with a protective lightpath comprising the optical link L42 and the optical link L14,
- the fourth row "ON1 to ON4" from the left of figure FIG.2 depicts a principal lightpath between the fourth optical node ON4 and the first optical node ON1 carried on the optical link L14, with a protective lightpath comprising the optical link L15 and the optical link L45,
- the fifth row "ON2 to ON4" from the left of figure FIG.2 depicts a principal lightpath between the fourth optical node ON4 and the second optical node ON2 carried on the optical link L42, with a protective lightpath comprising the optical link L25 and the optical link L45,
- the sixth row "ON2 to ON5" from the left of figure FIG.2 depicts a principal lightpath between the second optical node ON2 and the fifth optical node ON5 carried on the optical link L25, with a protective lightpath comprising the optical link L15 and the optical link L12.

The optical resources grid from the optical network NT from figure FIG. 2 illustrates the non-optimal usage of the existing protection mechanism. In order to sustain the optical capacity of the main lightpath M15 in case of a failure, each optical link from the protective lightpath P15 has to be provisioned with the same optical capacity than the optical spectrum assigned to the main lightpath M15 on optical link L15. The same applies for the other main lightpaths and other protection lightpaths.

Another drawback of existing protection mechanism solutions reside in that the main lightpath M15 and the protective lightpath P15 must share the same carrier wavelength. Such phenomenon is depicted in figure FIG. 2 by the column "ON1 to ON5", wherein the optical spectrums from the main lightpath M15 and the protective lightpath P15 are spectrally aligned. The same constraint applies for the other main lightpaths and other protective ligthpaths. It is then impossible for two different main ligthpaths to use the same carrier wavelength and renders the system design of the optical network NT more difficult. Said difficulty increases when the number of optical links in a protective lightpath is greater than 2.

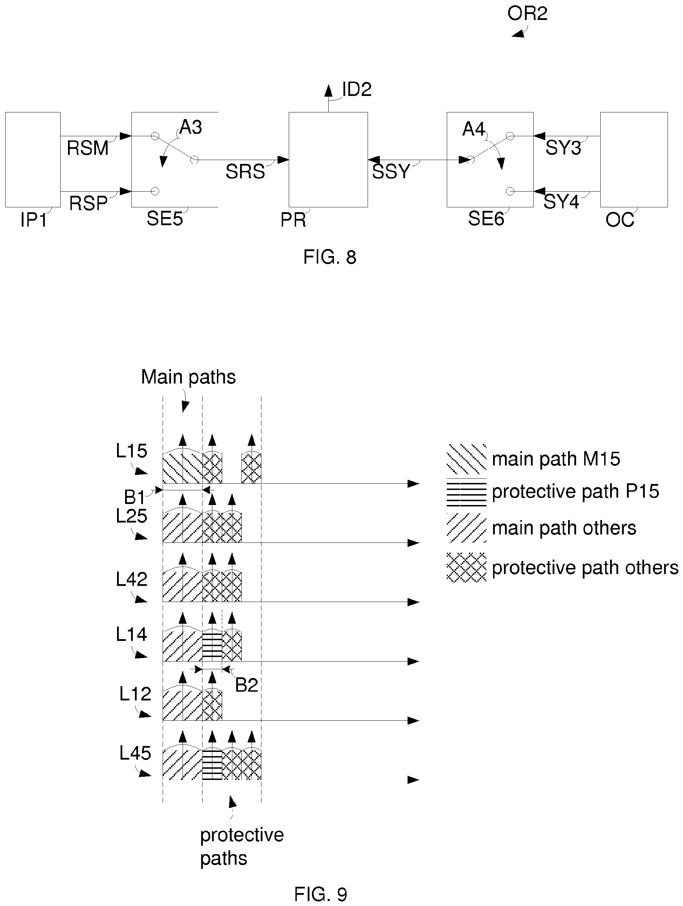

The present embodiments offer a practical solution of the above observed flaws of the existing protection mechanism. The corresponding optical resources grid offer by the present embodiments will be described below, in particular through figure FIG. 9.

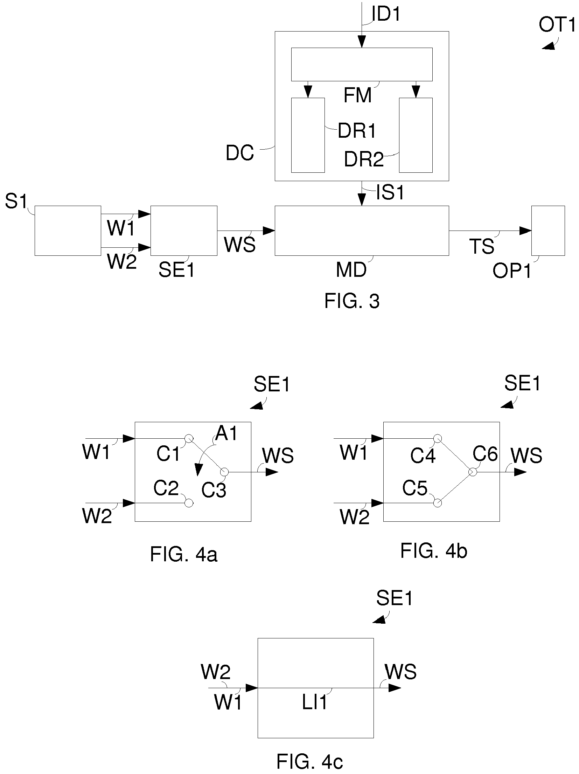

Referring to figure FIG. 3, a schematic block diagram of an optical transmitter according to an embodiment of the invention is depicted.

The first optical node ON1 according to embodiments is an optical node from the optical network NT. Said first optical node ON1 is enabled to manage optical signals to be received and/or to be transmitted. In an embodiment, the first optical node ON1 comprises a first optical transmitter OT1.

In an embodiment, the first optical transmitter OT1 comprises:
- a laser device S1,
- a first carrier wavelength selector SE1 that cooperates with the laser device,
- an optical modulator MD that cooperates with the first carrier wavelength selector SE1,
- a digital client DC that cooperates with the optical modulator MD,
- an optical output port OP1 enabled to transmit on the optical links connected to the first optical node ON1, such as the optical link L14 and the optical link L15,

The first optical transmitter OT1 also comprises a supervision entity, not depicted on figure FIG. 3, enabled to interact with each of the functionalities from said first optical transmitter OT1. Said supervision entity is adapted to configure the tuning of laser device S1 for example, or to obtain metrics related to the processing from the optical modulator MD or from the digital client. The supervision entity is also responsible to take action in case a report of a failure on the optical network NT is received by the first optical node ON1, or if said first optical node ON1 is able to detect itself outages on optical links.

The laser device S1 is a laser source producing optical signals. Said laser device S1 is enabled to generate a first carrier signal W1 on a first carrier wavelength. The first carrier signal W1 is suitable for being transmitted over the optical links from the optical network NT and has a central frequency or carrier frequency corresponding to the first carrier wavelength.

The laser device S1 is also enabled to generate a second carrier signal W2 on a second carrier wavelength. Similarly to the second carrier signal W1, the second carrier signal W2 is suitable for being transmitted over the optical links from the optical network NT and has a central frequency or carrier frequency corresponding to the second carrier wavelength.

In an embodiment, the first carrier wavelength and the second carrier wavelength are different carrier wavelengths. They correspond then to separate optical spectrum in the optical resources grid from the optical network NT.

In an embodiment the laser device S1 is enabled to generate simultaneously the first carrier signal W1 and the second carrier signal W2. In an example the laser device S1 comprises two laser sources, one being tuned on the first carrier wavelength, the other one being tuned on the second carrier wavelength.

It should be noted that in these embodiments, the laser device S1 is not limited to a two laser sources, and may comprise three or more laser sources.

In another embodiment the laser device S1 comprises only a single laser source which is fast tunable on a configured carrier wavelength. In an example, the laser device S1 is adapted to tune from the first carrier wavelength to the second carrier wavelength in a short period of time. In an embodiment, said short period of time is less than a magnitude of hundreds of microseconds. In an embodiment, said short period of time is in the magnitude of hundreds of nanoseconds. Such a short period of time is advantageous as it allows a carrier wavelength switch with an imperceptible signal disruption. The laser device S1 is configured by the supervision entity to either transmit the first carrier signal W1 or the second carrier signal W2.

In an embodiment, the laser device S1 provides the first carrier signal W1 and/or the second carrier signal W2 to the first carrier wavelength selector SE1. Said first carrier wavelength selector SE1 is adapted to select one of the two carrier signal that it receives from the laser device S1. Such selection may be ordered by the supervision entity in an example. Upon the selection of the first carrier signal W1 or the second carrier signal W2, the first carrier wavelength selector SE1 outputs a selected optical signal WS. Said selected optical signal WS results then from the selection of the first carrier signal W1 or from the selection of the second carrier signal W2. Depending on the configuration of the first carrier wavelength selector SE1, the selected optical signal WS corresponds to the first carrier signal W1 or to the second carrier signal W2.

In an embodiment, the first carrier wavelength selector SE1 provides the selected optical signal WS to the optical modulator MD.

The optical modulator MD is also provided with a transmit informative signal IS1 which is an analog electrical signal comprising first informative data ID1. Said informative data ID1 is a digital signal in the electrical domain and corresponds to the data content to be transmitted from the first optical node ON1 to the fifth optical node ON5, either through the main path M15 or though the protective path P15 in case a failure event is detected on the main path M15.

The optical modulator MD performs the optical modulation of the transmit informative signal IS1 with the selected optical signal WS. The optical modulator MD outputs an output optical signal TS resulting from said optical modulation. The output optical signal TS is an optical signal which carrier frequency corresponds to the carrier frequency from the selected optical signal WS, and said output optical signal TS further comprises the first informative data ID1. In an example the optical modulator MD is a Pulse-density modulation modulator.

The optical modulator MD provides the output optical signal TS to the optical output port OP1. Said optical output port is connected to the optical link L14 and the optical link L15 and is enabled to either transmit the output optical signal TS on said optical link L14 or on said optical link L15.

In an embodiment, in normal operation, the laser device S1 provides the first carrier signal W1 to the first carrier wavelength selector SE1 which selects said first carrier signal W1 for outputting the selected optical signal WS. Said selected optical signal WS is modulated with the transmit informative signal IS1 for producing the output optical signal TS on the first carrier wavelength, which is further transmitted on the main path M15 by the optical output port OP1.

In an embodiment, in case of a failure event detected on the main light path M15, the laser device S1 is configured to provide the second carrier signal W2 to the first carrier wavelength selector SE1. Said first carrier wavelength selector SE1 is configured to select said second carrier signal W2 to output the selected optical signal WS. Said selected optical signal WS is modulated with the first informative data ID1 for producing the output optical signal TS. Said output optical signal TS is characterized by its central frequency or carrier frequency that corresponds to the second carrier wavelength. The output optical signal TS is transmitted by the output optical port OP1 on the protective lightpath P15.

Therefore in case of a failure event, with minimum disruption, the first optical node ON1 is adapted for transmitting the first informative data ID1 through the output optical signal TS centered on the second carrier wavelength and on the protective lightpath P15.

In an embodiment, the digital client is provided with the first informative data ID1. The digital client DC is adapted to convert from the digital domain to the analog domain the first informative data ID1. The digital client DC comprises an encoding and mapping processing block FM, and a first digital to analog converter and amplifier DR1 and a second digital to analog converter and amplifier DR2. The digital client DC is depicted with a simplified architecture and is not limited to two digital to analog converter and amplifier blocks.

The encoding and mapping processing block FM may comprise functionalities such as repetition encoding, forward error correction encoding and symbol mapper, and digital pre-emphasis.

The digital to analog converter and amplifier blocks DR1 and DR2 may comprise respectively digital to analog conversion from the electrical domain to the optical domain, and amplification functionality.

The processing of the digital client DC on the first informative data ID1 results into the generation of the transmit informative signal IS1.

In an embodiment, the digital client DC is adapted to dynamically modify the spectrum bandwidth occupied by the transmit informative signal IS1. Such modification can be achieved thanks to the functionalities from the encoding and mapping processing block FM and the digital to analog convert and amplifier blocks DR1 and DR2. In an example the digital client DC is implemented to achieve flex symbol rate through repetition coding.

In an embodiment, in normal operation, the digital client DC generates the transmit informative signal IS1 so that it occupies the first spectrum bandwidth B1.

In another embodiment, in case an outage is detected on the main lightpath M15, the digital client DC is configured to modify the spectrum bandwidth of the transmit informative signal IS1. Said digital client DC generates the transmit informative signal IS1 so that it occupies a second spectrum bandwidth. In an example said second spectrum bandwidth is smaller than the first spectrum bandwidth B1. Preferably, the second spectrum bandwidth is chosen according to the volume of premium class traffic to be conveyed on the main lightpath M15. For example the second spectrum bandwidth represents 30% of the first spectrum bandwidth B1.

Referring to figure FIG. 4a, a schematic block diagram of a first carrier wavelength selector device node according to an embodiment of the invention is depicted.

In an embodiment, the first carrier wavelength selector device SE1 comprises two inputs, one being provided with the first carrier signal W1, and the other being provided with the second carrier signal W2. The first carrier wavelength selector device SE1 further comprises an output for outputting the selected optical signal WS.

In an embodiment the first carrier wavelength selector device SE1 is an optical switch. Two configurations of the first carrier wavelength selector device SE1 are possible:
- a connector C1 and a connector C3 comprised in the first carrier wavelength selector device SE1 are linked together, so that the first carrier signal W1 arriving on one of the input of the device is outputted as the selected optical signal WS,
- a connector C2 comprised in the first carrier wavelength selector device SE1 and the connector C3 are linked together, so that the second carrier signal W2 arriving on the other input of the device is outputted as the selected optical signal WS.

The first carrier wavelength selector device SE1 is adapted to be dynamically configured according to one of the two above configurations. The arrow A1 depicts a configuration change, from a state wherein connectors C1 and C3 are linked, to a state wherein connectors C2 and C3 are connected. Such change of state can be achieved in a reasonable short period of time which does not affect the operations of the first optical node ON1.

In normal operation, the first carrier wavelength selector device SE1 selects the first carrier signal W1 for outputting the selected optical signal WS.

In case of an issue experienced on the main lightpath, the first carrier wavelength selector device SE1 is configured for selecting the second carrier signal W2 for outputting the selected optical signal WS.

Referring to figure FIG. 4b, another schematic block diagram of a first carrier wavelength selector device node according to an embodiment of the invention is depicted.

In an embodiment, the first carrier wavelength selector device SE1 comprises two inputs, one being provided with the first carrier signal W1, and the other being provided with the second carrier signal W2. The first carrier wavelength selector device SE1 further comprises an output for outputting the selected optical signal WS.

In an embodiment the first carrier wavelength selector device SE1 is an optical coupler. Such first carrier wavelength selector device SE1 may comprise:
- a connector C4 connected to one of the input of the optical coupler, and connected to a connector C6,
- a connector C5 connected to the other input of the optical coupler, and connected to the connector C6,
- the connector C6 connected to the output of the optical coupler.

In an embodiment, in normal operation, the laser device S1 generates only the first carrier signal W1, which is then provided to the first carrier wavelength selector device SE1. Said first carrier wavelength selector device SE1 is then outputting the selected optical signal WS which corresponds to the first carrier signal W1. In case a failure on the main lightpath M15 is detected, the laser device S1 generates the second carrier signal W2 instead of the first carrier signal W1. Said second carrier signal W2 is then provided to the first carrier wavelength selector device SE1 which outputs the selected optical signal WS.

In another embodiment, in normal operation and in case of a failure of the main lightpath M15, the laser device S1 generates simultaneously the first carrier signal W1 and the second carrier signal W2, which are provided to the first carrier wavelength selector device SE1. The first carrier wavelength selector device S1 combines the first carrier signal W1 and the second carrier signal W2 into the selected optical signal WS.

Referring to figure FIG. 4c, another schematic block diagram of a first carrier wavelength selector device node according to an embodiment of the invention is depicted.

In an embodiment, the first carrier wavelength selector device SE1 comprises one input connected to an output from the laser device S1. The first carrier wavelength selector device SE1 further comprises an output for outputting the selected optical signal WS. Said first carrier wavelength selector device SE1 is an optical line.

In normal operation of the main lightpath M15, the laser device S1 is configured to generate the first carrier signal W1 which is provided to the first carrier wavelength selector device SE1 which outputs it as the selected optical signal WS.

In case an outage is occurring on the main lightpath M15, the laser device S1 is configured to switch to the second carrier signal W2 which is provided to the first carrier wavelength selector device SE1. The outputted selected optical signal WS corresponds then to the second carrier signal W2.

In an embodiment, not depicted in the figures, the first carrier wavelength selector device SE1 is a Wavelength Selective Switching (WSS) device provided with the first carrier wavelength and the second carrier wavelength and enabled to perform a selection of one of said carrier wavelength to be outputted on outputs ports from said WSS device.

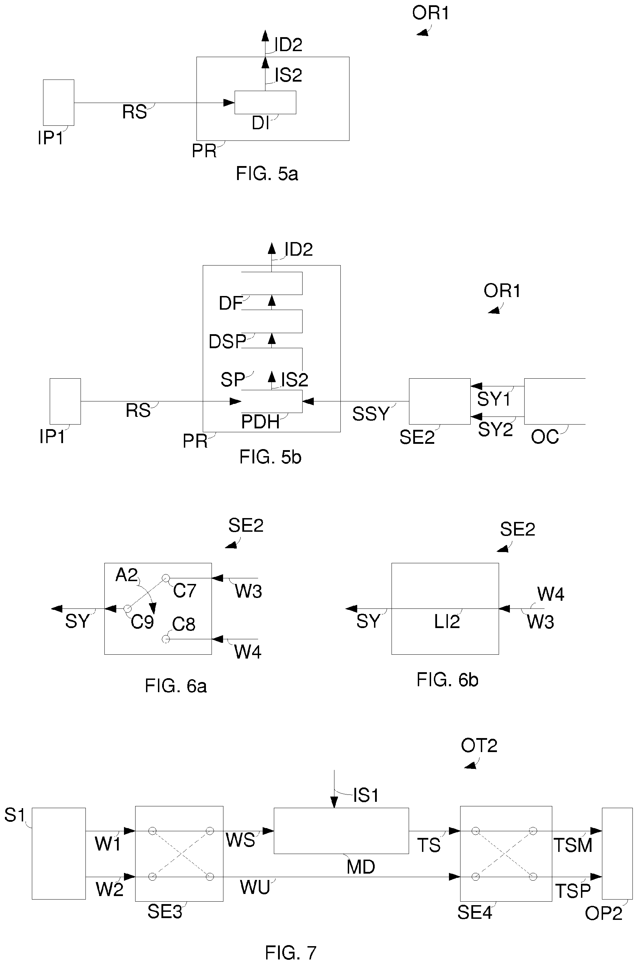

Referring to figure FIG. 5a, a schematic diagram of an optical receiver according to an embodiment of the invention is depicted.

In an embodiment the first optical node ON1 further comprises a first optical receiver OR1. Said first optical receiver OR1 comprises:
- the input optical port IP1 for receiving an input optical signal RS conveyed on the main light path M15 or on the protective light path P15,
- the optical demodulator PR for processing the received input optical signal RS.

In an embodiment the optical demodulator PR is adapted to process the received input optical signal RS for extracting a receive informative signal IS2. Said receive informative signal IS2 is further processed by the optical demodulator PR for extracting a receive informative data ID2 which corresponds to the useful data content to be received by the first optical receiver OR1.

In an example the optical demodulator PR comprises a photo-diode DI enabled to detect amplitude variations of the received input optical signal RS, and to translate said variations into an analog electrical signal corresponding to the receive informative signal IS2.

Referring to figure FIG. 5b, another schematic diagram of an optical receiver according to an embodiment of the invention is depicted.

In an embodiment the first optical node ON1 further comprises the first optical receiver OR1. Said first optical receiver OR1 is a coherent receiver that comprises:
- the input optical port IP1 for receiving an input optical signal RS conveyed on the main light path M15 or on the protective light path P15,
- the optical demodulator PR for processing the received input optical signal RS,
- a local oscillator OC for providing a first synchronization signal SY1 and a second synchronizations signal SY2,
- a second carrier wavelength selector device SE2 that cooperates with the local oscillator OC for being provided with the first synchronization signal SY1 and the second synchronizations signal SY2, said second carrier wavelength selector device SE2 cooperating also with the optical demodulator PR and providing a selected synchronization signal SSY.

In an embodiment the local oscillator OC is enabled to generate the first synchronization signal SY1 according to a third carrier wavelength. The local oscillator is also adapted to generate the second synchronization signal SY2 according to a fourth carrier wavelength, said third carrier wavelength and fourth carrier wavelength being different carrier wavelength.

In an embodiment, the first optical receiver OR1 cooperates with the first optical transmitter OT1 and the third carrier wavelength corresponds to the first carrier wavelength, and the fourth carrier wavelength corresponds to the second carrier wavelength.

In an embodiment, the local oscillator OC is adapted to generate simultaneously the first synchronization signal SY1 and the second synchronization signal SY2. In such case the local oscillator OC comprises two separate clock systems for generating two different synchronization signals.

In another embodiment, the local oscillator OC is a fast tunable oscillator. Said local oscillator OC is adapted to tune in a short period of time from a carrier wavelength to another carrier wavelength. In an embodiment said short period of time is below hundreds of microseconds. In an embodiment said short period of time is in the magnitude of hundreds of nanoseconds, which is advantageous as the impact of the tuning from a synchronization signal to another is negligible.

In an embodiment the local oscillator OC cooperates with the second carrier wavelength selector device SE2 which is provided with the first synchronization signal SY1 and the second synchronization signal SY2.

The second carrier wavelength selector device SE2 performs a selection on the synchronization signal it is provided with, and outputs the selected synchronization signal SSY. Said selected synchronization signal SSY results then from the selection of the first synchronization signal SY1 or from the selection from the second synchronization signal SY2.

The optical demodulator PR receives from the second carrier wavelength selector device SE2 the selected synchronization signal SSY. The optical demodulator PR locks its processing on said received selected synchronization signal SSY.

By locking on said selected synchronization signal SSY, the optical demodulator PR performs the demodulation of the input optical signal RS for outputting the receive informative signal IS2.

The optical demodulator PR further processes the receive informative signal for extracting a second informative data ID2 corresponding to data content conveyed by the input optical signal RS, and having the first optical node ON1 as destination endpoint.

In an embodiment, in case of normal operation, the local oscillator is configured to provide the first synchronization signal SY1 to the second carrier wavelength selector device SE2, which is configured to select said first synchronization signal SY1 for outputting the selected synchronization signal SSY. The latter is used by the optical demodulator PR for synchronizing the demodulation of the input optical signal RS.

In an embodiment, in case a failure is observed on the main lightpath M15, the local oscillator is configured to provide the second synchronization signal SY2 to the second carrier wavelength selector device SE2, which is configured to select said second synchronization signal SY2 for outputting the selected synchronization signal SSY. The latter is used by the optical demodulator PR for synchronizing the demodulation of the input optical signal RS.

Therefore according to embodiments, the first optical receiver OR1 is enabled to operate with normal conditions of the main lightpath M15 and also to operate with the protective lightpath P15 in case the main lightpath M15 is defective.

In an embodiment, the optical demodulator PR is adapted to modify the bandwidth to be demodulated from the input optical signal RS. In normal operation the input optical signal RS comprises the receive informative signal IS2 which occupies a third bandwidth spectrum. In an example, said third bandwidth spectrum is equivalent to the first bandwidth spectrum B1, but such case is not mandatory.

In case of a failure, the input optical signal RS is modified externally to the first optical node ON1, and comprises the receive informative signal IS2 which occupies a fourth bandwidth spectrum, said fourth bandwidth spectrum being different from the third bandwidth spectrum. In an example, said fourth bandwidth spectrum is equivalent to the second bandwidth spectrum B2, but such case is not mandatory.

Similarly to the first spectrum bandwidth B1 and second spectrum bandwidth B2, the third spectrum bandwidth is chosen accordingly to the optical capacity of the main lightpath M15, and the fourth spectrum bandwidth is chosen accordingly to the optical capacity of the protective lightpath P15.

In an embodiment, the optical demodulator PR is a coherent demodulator and comprises a polarization diverse 90° hybrid device PDH, a sampling processing device SP, digital signal processing functionalities DSP and a demapper and forward error correction FEC device DF. The devices and functionalities of the optical demodulator PR makes it possible to adapt the demodulation from the third spectrum bandwidth to the fourth spectrum bandwidth. It should be noted that the switch from the fourth spectrum bandwidth to the third spectrum bandwidth is also possible, as well as the change from the second spectrum bandwidth B2 to the first spectrum bandwidth B1 at the first optical transmitter OT1's side.

The ease of switch from the main lightpath M15 to the protective lightpath P15 and to change the spectrum bandwidth of operation render the first optical node ON1 particularly efficient for managing outages.

Referring to figure FIG. 6a, a schematic block diagram of a second carrier wavelength selector device node according to an embodiment of the invention is depicted.

In an embodiment, the second carrier wavelength selector device SE2 is an optical switch. It comprises one input receiving the first synchronization signal SY1 and another input receiving the second synchronization signal SY2. It further comprises an output for outputting the selected synchronization signal SSY.

Two configurations of the second carrier wavelength selector device SE2 implemented through an optical switch are possible:
- a connector C7 and a connector C9 comprised in the second carrier wavelength selector device SE2 are linked together, so that the first synchronization signal SY1 is outputted as the selected synchronization signal SSY,
- a connector C8 comprised in the second carrier wavelength selector device SE2 and the connector C9 are linked together, so that the second synchronization signal SY2 is outputted as the selected synchronization signal SSY.

The second carrier wavelength selector device SE2 is adapted to be dynamically configured according to one of the two above configurations. The arrow A2 depicts a configuration change, from a state wherein connectors C7 and C9 are linked, to a state wherein connectors C8 and C9 are connected. Such change of state can be achieved in a reasonable short period of time which does not affect the operations of the first optical node ON1.

In normal operation, the second carrier wavelength selector device SE2 selects the first synchronization signal SY1 for outputting the selected synchronization signal SSY.

In case of an issue experienced on the main lightpath, the second carrier wavelength selector device SE2 is configured for selecting the second synchronization signal SY2 for outputting the selected synchronization signal SSY.

In case the second carrier wavelength selector device SE2 is an optical switch, the local oscillator OC may either generate simultaneously the first synchronization signal SY1 and the second synchronization signal SY2, or generate alternatively the first synchronization signal SY1 and the second synchronization signal SY2.

Referring to figure FIG. 6b, another schematic block diagram of a second carrier wavelength selector device according to an embodiment of the invention is depicted.

In an embodiment the second carrier wavelength selector device SE2 is an optical line and comprises one input connected to the local oscillator, and an output connected to the optical demodulator PR.

The local oscillator OC is a fast tunable local oscillator that generates either the first synchronization signal SY1 or the second synchronization signal SY2.

In case of normal operation on the optical network NT, the local oscillator OC provides the first synchronization signal SY1 to the second carrier wavelength selector device SE2, which selects said first synchronization signal SY1 to output the selected synchronization signal SSY. The latter is used by the optical demodulator to perform the optical demodulation of the input optical signal RS.

In case of a failure of the main lightpath, the local oscillator is configured to tune on the fourth carrier wavelength for generating the second synchronization signal SY2 which is provided to the second carrier wavelength selector device SE2. Said second carrier wavelength selector device SE2 is configured to select said second synchronization signal SE2 to output the selected synchronization signal SSY. The latter is used by the optical demodulator to perform the optical demodulation of the input optical signal RS.

Referring to figure FIG. 7, another schematic block diagram of an optical transmitter according to an embodiment of the invention is depicted.

In an embodiment, a second optical transmitter OT2 comprises the same embodiments from the first optical transmitter OT1, and thus operates with the same features. The second optical transmitter OT2 comprises:
- the laser device S1,
- the first carrier wavelength selector device SE3, which is connected to the laser device S1,
- the optical modulator MD, which is connected to the first carrier wavelength selector device SE3,
- a first other optical switch SE4, which is connected to the optical modulator MD and to the first carrier wavelength selector device SE4, and is further connected to the output optical port OP2.

In an embodiment, the first carrier wavelength selector device SE3 is a 2x2 optical switch that comprises:
- an input for receiving the first carrier signal W1,
- another input for receiving the second carrier signal W2,
- an output for outputting the selected optical signal WS, said output being connected to the input from the optical modulator MD,
- another output for outputting an unselected optical signal WS, said output being connected to the first other optical switch SE4.

In an embodiment, the first other optical switch SE4 is a 2x2 optical switch that comprises:
- an input for receiving the output optical signal TS,
- another input for receiving the unselected optical signal WS,
- an output for outputting a main output optical signal TSM, said output being connected to the output optical port OP2 which transmits said main output optical signal TSM on the main lightpath M15
- another output for outputting a protective output optical signal TSP, said output being connected to the output optical port OP2 which transmits said protective output optical signal TSP on the protective lightpath P15.

In an embodiment, in normal operation, the laser device S1 generates simultaneously the first carrier signal W1 and the second carrier signal W2.

The first carrier wavelength selector device SE3 is configured for selecting the first carrier signal W1 for outputting the selected optical signal WS, and for selecting the second carrier signal W2 for outputting the unselected optical signal WU.

The selected optical signal WS is processed by the optical modulator MD, which performs an optical modulation with the transmit informative signal IS1, and outputs the output optical signal TS.

Said output optical signal TS is provided to the first other optical switch, that selects said output optical signal TS for outputting the main output optical signal TSM on the main lightpath M15.

The unselected optical signal WU is provided to the first other optical switch, that selects said unselected optical signal WU for outputting the protective optical signal TSP on the protective lightpath P15.

The main lightpath M15 is then conveying informative signal through the combination of the first carrier signal W1 and the transmit informative signal IS1, whereas the protective lightpath P15 is loaded only with the second carrier signal W2. Such transmission scheme may be beneficial in case it is needed to transmit optical power all the time on the optical links from the different lightpath.

In an embodiment, in case a failure occurs on the main lightpath M15, the first carrier wavelength selector device SE3 is configured for selecting the second carrier signal W2 for outputting the selected optical signal WS and selects the first carrier signal W1 for outputting the unselected optical signal WU.

The selected optical signal WS, corresponding to the second carrier signal W2, is optically modulated with the transmit informative signal IS1 (possibly said transmit informative signal IS1 being comprised in the second spectrum bandwidth B2) by the optical modulator MD, which outputs the output optical signal TS.

Said output optical signal TS is provided to the first other optical switch which is configured for selecting said output optical signal TS for outputting the protective output optical signal TSP, which is transmitted by the output optical port OP2 on the protective lightpath P15.

The unselected optical signal WU, corresponding to the first carrier signal W1, is provided to the first other optical switch SE4, which is configured for selecting said unselected optical signal WU for outputting the main output optical signal TSM, which is transmitted by the output optical port OP2 on the main lightpath M15. Such transmission scheme mirrors the scheme used in the normal operation, and allows to optically load the main lightpath M15 with an optical signal not carrying informative data, and to convey the informative data through the protective lightpath P15.

Referring to figure FIG. 8, another schematic block diagram of an optical receiver according to an embodiment of the invention is depicted.

In an embodiment a second optical receiver OR2 comprises the same embodiments as the first optical receiver OR1, and thus operates with the same features. The second optical receiver OR2 comprises:
- the first input optical port IP1 for receiving a main input optical signal RSM received on the main lightpath M15, and for receiving a protective input optical signal RSP received on the protective lightpath P15,
- a second other optical switch SE5, being a 2x1 optical switch, said optical switch being provided on an input with the main input optical signal RSM and being provided on another input with protective input optical signal RSP, said second other optical switch SE5 outputting a selected received optical signal SRS,
- the local oscillator generating the first synchronization signal SY3 and the second synchronization signal SY4,
- the second carrier wavelength selector device SE6 being provided with the first synchronization signal SY3 and the second synchronization signal SY4, and outputs the selected synchronization signal SSY,
- the optical demodulator PR being provided with the selected synchronization signal SSY and with the selected received optical signal SRS.

Alternatively, in an embodiment, the second other optical switch SE5 is replaced by a Wavelength Selective Switching (WSS) device provided on an input with the main input optical signal RSM and being provided on another input with protective input optical signal RSP, and outputting the selected received optical signal SRS.

In an embodiment, in case of normal operation on the main lightpath M15, the second other optical switch SE5 is configured to select the main input optical signal RSM for outputting the selected receive optical signal SRS. The second carrier wavelength selector device SE6 is configured to select the first synchronization signal SY3 for outputting the selected synchronization signal SSY. The optical demodulator PR performs then the optical demodulation of the selected receive optical signal SRS, which corresponds to an optical signal conveyed on the main lightpath M15, said demodulation being locked on the first synchronization signal SY3. In such receiving scheme, the first optical node ON1 is adapted to receive optical signals on both main lightpath M15 and protective lightpath P15, wherein only the main lightpath M15 is loaded with informative data.

In an embodiment, in case of an outage on the main lightpath M15, the second other optical switch SE5 is configured (arrow A3) to select the protective input optical signal RSP for outputting the selected receive optical signal SRS. The second carrier wavelength selector device SE6 is configured (arrow A4) to select the second synchronization signal SY4 for outputting the selected synchronization signal SSY. The optical demodulator PR performs then the optical demodulation of the selected receive optical signal SRS, which corresponds to an optical signal conveyed on the protective lightpath P15, said demodulation being locked on the second synchronization signal SY4. In such receiving scheme, the first optical node ON1 is adapted to receive optical signals on both main lightpath M15 and protective lightpath P15, wherein only the protective lightpath P15 is loaded with informative data.

Referring to figure FIG. 9, a schematic block diagram of optical resources available in an optical network according an embodiment of the invention is depicted.

The figure FIG. 9 depicts an optical resources flex-grid from the optical network NT that is obtained thanks to present embodiments.

Similarly to notation used in figure FIG. 2, on the y-axis, the optical links from the optical network NT are depicted. On the x-axis, the scale of optical spectrum is represented.

The spectrum used for the main lightpath M15 is the spectrum from the optical link L15 identified with oblique hatching descending from the left to the right. The spectrums used for the protective lightpath P15 are the spectrum from the optical link L14 and the spectrum from the optical link L45, both identified with horizontal hatching.

Spectrums used by other main lightpaths from the optical network NT are identified with oblique hatching ascending from the left to the right. Spectrums used by other protective lightpaths from the optical network NT are identified with crossed hatching.

Differing to the optical resources repartition as depicted on figure FIG. 2, each of the main lightpaths can use the same spectrum bandwidth. This can be achieved thanks to the ability of the optical nodes such as the first optical node ON1 to switch from the main lightpath to the protective lightpath and to the disjoint assignments of the optical links. The possibility to align or not the spectrums used by the main ligthpaths eases the system design of the optical network NT. It is also advantageous to implement a true flexible grid of optical resources. Subsequently to this freedom of spectrum allocation for the main ligthpaths, the used spectrum for the protective ligthpaths is also facilitated, since spectrum collisions are easily avoided. This can also be achieved thanks to the ability from the optical nodes such as the first optical node ON1 to switch from a main lightpath to a protective lightpath, form a carrier wavelength to another carrier wavelength.

It should be noted that the first optical transmitter OT1 has been depicted as being able to manage two carrier wavelengths, one for the main lightpath and the other one for the protective lightpath, but the first optical transmitter OT1 is not limited to two carrier wavelengths and may be able to manage three or more carrier wavelengths.

For example the laser device S1 may be able to generate four different carrier wavelengths signals, one carrier wavelength signal being assigned to a main lightpath and the others carrier wavelengths signals being assigned to protective lightpaths. In another example, the laser device S1 may be able to generate four different carrier wavelengths signals, two carrier wavelength signals being assigned to main lightpaths and the two others carrier wavelengths signals being assigned to protective ligthpaths.

Similarly the first carrier wavelength selector device SE1 may comprise M inputs and N inputs, M being greater than two, for example four, N being greater than one, for example four.

The first optical transmitter OT1 may comprise accordingly more than one optical modulator MD.

Similarly to the first optical transmitter OT1, the first optical receiver OR1 is not limited to the management of two carrier wavelengths and may be able to process more than two carrier wavelengths.

In an example wherein the first optical receiver OR1 is a coherent receiver, the local oscillator OC is enabled to generate a number P of synchronization signals, P being greater than one, for example five. Accordingly the second carrier wavelength selector device SE2 comprises P inputs and Q outputs, Q being greater than one, for example five.

The present embodiments offer also a finer allocation of spectrum for the protective ligthpaths. In order to have an optimal usage of the optical resources and to avoid wasted resources caused by systematic over-allocation, in case of a failure it should be preferable to favor the data traffic that is the most important. The optical nodes such as the first optical node ON1 can advantageously adapt their modulation/demodulation to modify the spectrum bandwidth of operation depending on a normal operation of the network or in case an outage is experienced. The flexibility of bandwidth operation and the switching from the main lightpath to the protective lightpath allows to have reduced spectrum bandwidths allotted to the protective ligthpaths. As depicted on figure FIG.2, each main lightpath occupies each a spectrum bandwidth equivalent to the first spectrum bandwidth B1, whereas each protective lightpath occupies a spectrum bandwidth equivalent to the second spectrum bandwidth B2, said second spectrum bandwidth B2 being smaller than the first spectrum bandwidth B1. This possibility to reduce the spectrum bandwidths used for the protective lightpaths offers more flexibility in the allocation of the optical resources.

According to embodiments, the first optical node ON1 offers a better usage of optical resources from the optical network NT which enforces the flex-grid requisite by consuming less optical resources and removing spectrum allocation constraints. Furthermore the first optical node ON1 offers a simple and cost effective solution by using a single optical modulator at transmission side and a single optical demodulator at receiving side, which is compatible with CAPEX and OPEX considerations.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. An optical node (ON1) for managing optical signals, said optical node (ON1) being configurable to be connected to a main lightpath (M15) and to a protection lightpath (P15), said protection lightpath (P15) being an alternate optical path in case of a failure event on the main lightpath (M15), the optical node (ON1) being configurable to transmit an output optical signal (TS) on a first carrier wavelength on the main optical path (M15), said optical node (ON1) **characterized by**:
- a first carrier wavelength selector device (SE1) being configurable to be provided with a first carrier signal (W1) on the first carrier wavelength and with a second carrier signal (W2) on a second carrier wavelength, said first carrier wavelength and said second carrier wavelength being different carrier wavelengths, and adapted for outputting a selected optical signal (WS), said selected optical signal (WS) resulting from the selection of the first carrier signal (W1) or from the selection of the second carrier signal (W2),
- an optical modulator device (MD) for performing the modulation of a transmit informative signal (IS1) with the selected optical signal (WS), said transmit informative signal comprising first informative data (ID1), said modulation resulting into the output optical signal (TS),
and in response to occurrence of a failure event on the main lightpath (M15), the optical node (ON1) being adapted for:
- configuring the first carrier wavelength selector device (SE1) for selecting the second carrier signal (W2) for outputting the selected optical signal (WS) to be provided to the optical modulator device (MD),
- transmitting the output optical signal (TS) on the protection lightpath (P15), said output optical signal (TS) resulting from the modulation performed by the optical modulator device (MD).

2. An optical node (ON1) according to claim 1 further comprising:
- a digital client device (DC) being adapted for outputting the transmit informative signal (IS1) comprised in a first spectrum bandwidth (B1) chosen according to an optical capacity of the main lightpath (M15),
and in response to occurrence of a failure event on the main lightpath (M15), the optical node (ON1) being further adapted for configuring the digital client device (DC) for adapting the transmit informative signal (IS1) to a second spectrum bandwidth (B2) chosen according to an optical capacity of the protection lightpath (P15).

3. An optical node (ON1) according to any of the claims 1 to 2, configurable to receive an input optical signal (RS) on the main lightpath (M15), said main lightpath (M15) being a bidirectional lightpath, said input optical signal (RS) being conveyed on a third carrier wavelength, said optical node (ON1) further comprising an optical demodulator device (PR) for performing the demodulation of the input optical signal (RS) and for outputting a receive informative signal (IS2), and in response to occurrence of a failure event on the main lightpath the optical node (ON1) being adapted for receiving the input optical signal (RS) on the protection lightpath (P15), said protection lightpath (P15) being a bidirectional lightpath.

4. An optical node (ON1) according to claim 3, said optical node (ON1) further comprising:
- a second carrier wavelength selector device (SE2) being configurable to be provided with a first synchronization signal (SY1) locked on the third carrier wavelength and with a second synchronization signal (SY2) locked on a fourth carrier wavelength, said third carrier wavelength and fourth carrier wavelength being different carrier wavelengths, and adapted for outputting a selected synchronization signal (SSY), said selected synchronization signal (SSY) resulting from the selection of the first synchronization signal (SY1) or from the selection of the second synchronization signal (SY2),
- the optical demodulator device (PR) for performing the demodulation synchronized with the selected synchronization signal (SSY) provided by the second carrier wavelength selector device (SE2),
and in response to occurrence of a failure event on the main lightpath the optical node (ON1) being adapted for:
- configuring the second carrier wavelength selector device (SE2) for selecting the second synchronization signal (SY2) for outputting the selected synchronization signal (SSY),
- configuring the optical demodulator device for synchronizing on the selected synchronization signal (SSY),
- receiving the input optical signal (RS) on the protection lightpath (P15).

5. An optical node (ON1) according to claim 4 wherein the optical demodulator is adapted for outputting the receive informative signal (IS2) comprised in a third spectrum bandwidth chosen according to the optical capacity of the main lightpath (M15), and in response to occurrence of a failure event on the main lightpath (M15), said optical node (ON1) being further adapted for configuring the optical demodulator (PR) for demodulating the receive informative signal (IS2) being comprised in a fourth spectrum bandwidth chosen according to the optical capacity of the protection lightpath (P15).

6. An optical node (ON1) according to any of the claims 4 to 5, wherein the second carrier wavelength selector device (SE2) is selected from the group of devices consisting of an optical switch comprising two inputs and one output, and an optical line comprising one input and one output.

7. An optical node (ON1) according to any of the claims 1 to 6, wherein the first carrier wavelength selector device (SE1) is selected from the group of devices consisting of an optical switch comprising two inputs and one input, an optical coupler comprising two inputs and one input, an optical line comprising one input and one output, and a wavelength selective switching device comprising two inputs and one input.

8. An optical node (ON1) according to any of the claims 1 to 6,
- wherein the first carrier wavelength selector device (SE3) is an optical switch comprising two inputs and two outputs, one output outputting the selected optical signal (WS), the other output outputting an unselected optical signal (WU) resulting from the non selection of the first carrier signal (W1) or from the non selection of the second carrier signal (W2),
- said optical node (ON1) further comprising a first other optical switch (SE4) comprising two inputs and two outputs, one input being provided with the output optical signal (TS), the other input being provided with the unselected optical signal (WU), one output outputting a main output optical signal (TSM), the other outputting a protective output optical signal (TSP),
and in response to occurrence of a failure event on the main lightpath the optical node (ON1) being adapted for:
- configuring the first other optical switch so that the main output optical signal (TSM) corresponds to the unselected optical signal (WU), and so that the protective output optical signal (TSP) corresponds to the output optical signal (TS),
- transmitting the main output optical signal (TSM) on the main optical path (M15),
- transmitting the protective output optical signal (TSP) on the protective optical path (P15).

9. An optical node (ON1) according to any of the claims 4 to 8,
- wherein the second carrier wavelength selector device (SE6) is an optical switch comprising two inputs and one input,
- said optical node (ON1) further comprising a second other optical switch (SE5) comprising two inputs and one output, one of said inputs being provided with a main input optical signal (RSM) received on the main optical path (M15), the other of said inputs being provided with a protective input optical signal (RSP), said output outputting a selected receive optical signal (SRS), the selected receive optical signal (SRS) resulting from the selection of the main input optical signal (RSM) or from the selection of the protective input optical signal (RSP),
and in response to occurrence of a failure event on the main lightpath the optical node (ON1) being adapted for:
- configuring the second other optical switch (SE5) for selecting the protective input optical signal (RSP) for outputting the selected receive optical signal (SRS).

10. An optical node (ON1) according to any of the claims 4 to 9, wherein the first carrier wavelength corresponds to the third carrier wavelength, and the second carrier wavelength corresponds to the fourth carrier wavelength.

## Patentansprüche

1. Optischer Knoten (ON1) zum Managen optischer Signale, wobei der optische Knoten (ON1) konfigurierbar ist, mit einem Hauptlichtweg (M15) und einem Schutzlichtweg (P15) verbunden zu werden, wobei der Schutzlichtweg (P15) ein alternativer optischer Weg für den Fall eines Ausfallereignisses auf dem Hauptlichtweg (M15) ist, wobei der optische Knoten (ON1) konfigurierbar ist, ein optisches Ausgangssignal (TS) auf einer ersten Trägerwellenlänge auf dem Hauptlichtweg (M15) zu senden, wobei der optische Knoten (ON1) **gekennzeichnet ist durch**:
- eine erste Trägerwellenlängen-Auswahlvorrichtung (SE1), die dafür konfigurierbar ist, dass ein erstes Trägersignal (W1) auf der ersten Trägerwellenlänge und ein zweites Trägersignal (W2) auf einer zweiten Trägerwellenlänge zugeführt wird, wobei die erste Trägerwellenlänge und die zweite Trägerwellenlänge unterschiedliche Trägerwellenlängen sind, und ausgelegt ist zum Ausgeben eines ausgewählten optischen Signals (WS), wobei sich das ausgewählte optische Signal (WS) aus der Auswahl des ersten Trägersignals (W1) oder aus der Auswahl des zweiten Trägersignals (W2) ergibt,
- eine Optischer-Modulator-Vorrichtung (MD) zum Durchführen der Modulation des ausgewählten optischen Signals (WS) mit einem Informationensendesignal (IS1), wobei das Informationensendesignal erste Informationsdaten (ID1) umfasst, wobei die Modulation das optische Ausgangssignal (TS) ergibt,
und als Reaktion auf Auftreten eines Ausfallereignisses auf dem Hauptlichtweg (M15) ist der optische Knoten (ON1) ausgelegt zum:
- Konfigurieren der ersten Trägerwellenlängen-Auswahlvorrichtung (SE1) zum Auswählen des zweiten Trägersignals (W2) zum Ausgeben des ausgewählten optischen Signals (WS), das der Optischer-Modulator-Vorrichtung (MD) zugeführt werden soll,
- Senden des optischen Ausgangssignals (TS) auf dem Schutzlichtweg (P15), wobei sich das optische Ausgangssignal (TS) aus der **durch** die Optischer-Modulator-Vorrichtung (MD) durchgeführten Modulation ergibt.

2. Optischer Knoten (ON1) nach Anspruch 1, der ferner Folgendes umfasst:
- eine Digitalclientvorrichtung (DC), die ausgelegt ist zum Ausgeben des Informationensendesignals (IS1), enthalten in einem ersten Bandbreitenspektrum (B1), das gemäß einer optischen Kapazität des Hauptlichtwegs (M15) gewählt ist,
und als Reaktion auf Auftreten eines Ausfallereignisses auf dem Hauptlichtweg (M15) ist der optische Knoten (ON1) ferner ausgelegt zum Konfigurieren der Digitalclientvorrichtung (DC) zum Anpassen des Informationensendesignals (IS1) auf ein zweites Bandbreitenspektrum (B2), das gemäß einer optischen Kapazität des Schutzlichtwegs (P15) gewählt ist.

3. Optischer Knoten (ON1) nach einem der Ansprüche 1 bis 2, konfigurierbar zum Empfangen eines optischen Eingangssignals (RS) auf dem Hauptlichtweg (M15), wobei der Hauptlichtweg (M15) ein bidirektionaler Lichtweg ist, wobei das optische Eingangssignal (RS) auf einer dritten Trägerwellenlänge transportiert wird, wobei der optische Knoten (ON1) ferner eine Optischer-Demodulator-Vorrichtung (PR) zum Durchführen der Demodulation des optischen Eingangssignals (RS) und zum Ausgeben eines Informationenempfangssignals (IS2) umfasst, und als Reaktion auf Auftreten eines Ausfallereignisses auf dem Hauptlichtweg ist der optische Knoten (ON1) ausgelegt zum Empfangen des optischen Eingangssignals (RS) auf dem Schutzlichtweg (P15), wobei der Schutzlichtweg (P15) ein bidirektionaler Lichtweg ist.

4. Optischer Knoten (ON1) nach Anspruch 3, wobei der optische Knoten (ON1) ferner Folgendes umfasst:
- eine zweite Trägerwellenlängen-Auswahlvorrichtung (SE2), die dafür konfigurierbar ist, dass dieser ein mit der dritten Trägerwellenlänge verriegeltes erstes Synchronisationssignal (SY1) und ein mit einer vierten Trägerwellenlänge verriegeltes zweites Synchronisationssignal (SY2) zugeführt werden können, wobei die dritte Trägerwellenlänge und die vierte Trägerwellenlänge verschiedene Trägerwellenlängen sind, und ausgelegt ist zum Ausgeben eines ausgewählten Synchronisationssignals (SSY), wobei sich das ausgewählte Synchronisationssignal (SSY) aus der Auswahl des ersten Synchronisationssignals (SY1) oder aus der Auswahl des zweiten Synchronisationssignals (SY2) ergibt,
- die Optischer-Demodulator-Vorrichtung (PR) zum Durchführen der Demodulation, synchronisiert mit dem durch die zweite Trägerwellenlängen-Auswahlvorrichtung (SE2) bereitgestellten ausgewählten Synchronisationssignal (SSY),
und als Reaktion auf Auftreten eines Ausfallereignisses auf dem Hauptlichtweg ist der optische Knoten (ON1) ausgelegt zum:
- Konfigurieren der zweiten Trägerwellenlängen-Auswahlvorrichtung (SE2) zum Auswählen des zweiten Synchronisationssignals (SY2) zum Ausgeben des ausgewählten Synchronisationssignals (SSY),
- Konfigurieren der Optischer-Demodulator-Vorrichtung zum Synchronisieren auf das ausgewählte Synchronisationssignal (SSY),
- Empfangen des optischen Eingangssignals (RS) auf dem Schutzlichtweg (P15).

5. Optischer Knoten (ON1) nach Anspruch 4, wobei der optische Demodulator ausgelegt ist zum Ausgeben des Informationenempfangssignals (IS2), das in einem dritten Bandbreitenspektrum enthalten ist, ausgewählt gemäß der optischen Kapazität des Hauptlichtwegs (M15), und als Reaktion auf Auftreten eines Ausfallereignisses auf dem Hauptlichtweg (M15) ist der optische Knoten (ON1) ferner ausgelegt zum Konfigurieren des optischen Demodulators (PR) zum Demodulieren des Informationenempfangssignals (IS2), das in einem vierten Bandbreitenspektrum enthalten ist, ausgewählt gemäß der optischen Kapazität des Schutzlichtwegs (P15).

6. Optischer Knoten (ON1) nach einem der Ansprüche 4 bis 5, wobei die zweite Trägerwellenlängen-Auswahlvorrichtung (SE2) aus der aus einem optischen Schalter, der zwei Eingänge und einen Ausgang umfasst, und einer optischen Leitung, die einen Eingang und einen Ausgang umfasst, bestehenden Gruppe von Vorrichtungen ausgewählt ist.

7. Optischer Knoten (ON1) nach einem der Ansprüche 1 bis 6, wobei die erste Trägerwellenlängen-Auswahlvorrichtung (SE1) aus der aus einem optischen Schalter, der zwei Eingänge und einen Eingang umfasst, einem optischen Koppler, der zwei Eingänge und einen Eingang umfasst, einer optischen Leitung, die einen Eingang und einen Ausgang umfasst, und einer wellenlängenselektiven Schaltvorrichtung, die zwei Eingänge und einen Eingang umfasst, bestehenden Gruppe von Vorrichtungen ausgewählt ist.

8. Optischer Knoten (ON1) nach einem der Ansprüche 1 bis 6,
- wobei die erste Trägerwellenlängen-Auswahlvorrichtung (SE3) ein optischer Schalter ist, der zwei Eingänge und zwei Ausgänge umfasst, wobei ein Ausgang das ausgewählte optische Signal (WS) ausgibt, der andere Ausgang ein nicht ausgewähltes optisches Signal (WU) ausgibt, das sich aus der Nichtauswahl des ersten Trägersignals (W1) oder aus der Nichtauswahl des zweiten Trägersignals (W2) ergibt,
- wobei der optische Knoten (ON1) ferner einen ersten anderen optischen Schalter (SE4) umfasst, der zwei Eingänge und zwei Ausgänge umfasst, wobei ein Eingang mit dem optischen Ausgangssignal (TS) beliefert wird, der andere Eingang mit dem nicht ausgewählten optischen Signal (WU) beliefert wird, ein Ausgang ein optisches Hauptausgangssignal (TSM) ausgibt, der andere ein optisches Schutzausgangssignal (TSP) ausgibt,
und als Reaktion auf Auftreten eines Ausfallereignisses auf dem Hauptlichtweg ist der optische Knoten (ON1) ausgelegt zum:
- Konfigurieren des ersten anderen optischen Schalters, so dass das optische Hauptausgangssignal (TSM) dem nicht ausgewählten optischen Signal (WU) entspricht, und so dass das optische Schutzausgangssignal (TSP) dem optischen Ausgangssignal (TS) entspricht,
- Senden des optischen Hauptausgangssignals (TSM) auf dem optischen Hauptweg (M15),
- Senden des optischen Schutzausgangssignals (TSP) auf dem optischen Schutzweg (P15).

9. Optischer Knoten (ON1) nach einem der Ansprüche 4 bis 8,
- wobei die zweite Trägerwellenlängen-Auswahlvorrichtung (SE6) ein optischer Schalter ist, der zwei Eingänge und einen Eingang umfasst,
- wobei der optische Knoten (ON1) ferner einen zweiten anderen optischen Schalter (SE5) umfasst, der zwei Eingänge und einen Ausgang umfasst, wobei einer der Eingänge mit einem optischen Haupteingangssignal (RSM) beliefert wird, das auf dem optischen Hauptweg (M15) empfangen wird, der andere der Eingänge mit einem optischen Schutzeingangssignal (RSP) beliefert wird, der Ausgang ein ausgewähltes optisches Empfangssignal (SRS) ausgibt, wobei sich das ausgewählte optische Empfangssignal (SRS) aus der Auswahl des optischen Haupteingangssignals (RSM) oder aus der Auswahl des optischen Schutzeingangssignals (RSP) ergibt,
und als Reaktion auf Auftreten eines Ausfallereignisses auf dem Hauptlichtweg ist der optische Knoten (ON1) ausgelegt zum:
- Konfigurieren des zweiten anderen optischen Schalters (SE5) zum Auswählen des optischen Schutzeingangssignals (RSP) zum Ausgeben des ausgewählten optischen Empfangssignals (SRS).

10. Optischer Knoten (ON1) nach einem der Ansprüche 4 bis 9, wobei die erste Trägerwellenlänge der dritten Trägerwellenlänge entspricht und die zweite Trägerwellenlänge der vierten Trägerwellenlänge entspricht.

## Revendications

1. Nœud optique (ON1) permettant de gérer des signaux optiques, ledit nœud optique (ON1) étant configurable pour être connecté à un trajet de lumière principal (M15) et à un trajet de lumière de protection (P15), ledit trajet de lumière de protection (P15) étant un trajet optique alternatif dans le cas d'un événement de défaillance sur le trajet de lumière principal (M15), le nœud optique (ON1) étant configurable pour transmettre un signal optique de sortie (TS) sur une première longueur d'onde de porteuse sur le trajet optique principal (M15), ledit nœud optique (ON1) étant **caractérisé par** :
- un dispositif sélecteur de première longueur d'onde de porteuse (SE1) qui est configurable pour accepter la fourniture d'un premier signal de porteuse (W1) sur la première longueur d'onde de porteuse et un deuxième signal de porteuse (W2) sur une deuxième longueur d'onde de porteuse, ladite première longueur d'onde de porteuse et ladite deuxième longueur d'onde de porteuse étant des longueurs d'onde de porteuse différentes, et conçu pour délivrer un signal optique sélectionné (WS), ledit signal optique sélectionné (WS) résultant de la sélection du premier signal de porteuse (W1) ou de la sélection du deuxième signal de porteuse (W2),
- un dispositif modulateur optique (MD) pour réaliser la modulation d'un signal informatif de transmission (IS1) avec le signal optique sélectionné (WS), ledit signal informatif de transmission comprenant des premières données informatives (ID1), ladite modulation résultant dans le signal optique de sortie (TS),
et en réaction à l'occurrence d'un événement de défaillance sur le trajet de lumière principal (M15), le nœud optique (ON1) est conçu pour :
- configurer le dispositif sélecteur de première longueur d'onde de porteuse (SE1) pour sélectionner le deuxième signal de porteuse (W2) pour délivrer le signal optique sélectionné (WS) destiné à être fourni au dispositif modulateur optique (MD),
- transmettre le signal optique de sortie (TS) sur le trajet de lumière de protection (P15), ledit signal optique de sortie (TS) résultant de la modulation réalisée par le dispositif modulateur optique (MD).

2. Nœud optique (ON1) selon la revendication 1 comprenant en outre :
- un dispositif client numérique (DC) conçu pour délivrer le signal informatif de transmission (IS1) compris dans une première largeur de bande spectrale (B1) choisie en fonction d'une capacité optique du trajet de lumière principal (M15),
et en réaction à l'occurrence d'un événement de défaillance sur le trajet de lumière principal (M15), le nœud optique (ON1) est conçu en outre pour configurer le dispositif client numérique (DC) afin d'adapter le signal informatif de transmission (IS1) à une deuxième largeur de bande spectrale (B2) choisie en fonction d'une capacité optique du trajet optique de protection (P15).

3. Nœud optique (ON1) selon l'une quelconque des revendications 1 à 2, configurable pour recevoir un signal optique d'entrée (RS) sur le trajet de lumière principal (M15), ledit trajet de lumière principal (M15) étant un trajet de lumière bidirectionnel, ledit signal optique d'entrée (RS) étant acheminé sur une troisième longueur d'onde de porteuse, ledit nœud optique (ON1) comprenant en outre un dispositif démodulateur optique (PR) pour réaliser la démodulation du signal optique d'entrée (RS) et pour délivrer un signal informatif de réception (IS2), et en réaction à l'occurrence d'un événement de défaillance sur le trajet de lumière principal le nœud optique (ON1) est conçu pour recevoir le signal optique d'entrée (RS) sur le trajet de lumière de protection (P15), ledit trajet de lumière de protection (P15) étant un trajet de lumière bidirectionnel.

4. Nœud optique (ON1) selon la revendication 3, ledit nœud optique (ON1) comprenant en outre :
- un dispositif sélecteur de deuxième longueur d'onde de porteuse (SE2) qui est configurable pour accepter la fourniture d'un premier signal de synchronisation (SY1) verrouillé sur la troisième longueur d'onde de porteuse et d'un deuxième signal de synchronisation (SY2) verrouillé sur une quatrième longueur d'onde de porteuse, lesdites troisième longueur d'onde de porteuse et quatrième longueur d'onde de porteuse étant des longueurs d'onde de porteuse différentes, et conçu pour délivrer un signal de synchronisation sélectionné (SSY), ledit signal de synchronisation sélectionné (SSY) résultant de la sélection du premier signal de synchronisation (SY1) ou de la sélection du deuxième signal de synchronisation (SY2),
- le dispositif démodulateur optique (PR) pour réaliser la démodulation synchronisée avec le signal de synchronisation sélectionné (SSY) fourni par le dispositif sélecteur de deuxième longueur d'onde de porteuse (SE2),
et en réaction à l'occurrence d'un événement de défaillance sur le trajet de lumière principal, le nœud optique (ON1) est conçu pour :
- configurer le dispositif sélecteur de deuxième longueur d'onde de porteuse (SE2) pour sélectionner le deuxième signal de synchronisation (SY2) pour délivrer le signal de synchronisation sélectionné (SSY),
- configurer le dispositif démodulateur optique pour qu'il se synchronise sur le signal de synchronisation sélectionné (SSY),
- recevoir le signal optique d'entrée (RS) sur le trajet de lumière de protection (P15).

5. Nœud optique (ON1) selon la revendication 4 dans lequel le démodulateur optique est conçu pour délivrer le signal informatif de réception (IS2) compris dans une troisième largeur de bande spectrale choisie en fonction de la capacité optique du trajet de lumière principal (M15), et en réaction à l'occurrence d'un événement de défaillance sur le trajet de lumière principal (M15), ledit nœud optique (ON1) est conçu en outre pour configurer le démodulateur optique (PR) pour démoduler le signal informatif de réception (IS2) qui est compris dans une quatrième largeur de bande spectrale choisie en fonction de la capacité optique du trajet de lumière de protection (P15).

6. Nœud optique (ON1) selon l'une quelconque des revendications 4 à 5, dans lequel le dispositif sélecteur de deuxième longueur d'onde de porteuse (SE2) est sélectionné parmi le groupe de dispositifs consistant en un commutateur optique comprenant deux entrées et une sortie, et une ligne optique comprenant une entrée et une sortie.

7. Nœud optique (ON1) selon l'une quelconque des revendications 1 à 6, dans lequel le dispositif sélecteur de première longueur d'onde de porteuse (SE1) est sélectionné parmi le groupe de dispositifs consistant en un commutateur optique comprenant deux entrées et une entrée, un coupleur optique comprenant deux entrées et une entrée, une ligne optique comprenant une entrée et une sortie, et un dispositif de commutation sélecteur de longueur d'onde comprenant deux entrées et une entrée.

8. Nœud optique (ON1) selon l'une quelconque des revendications 1 à 6,
- dans lequel le dispositif sélecteur de première longueur d'onde de porteuse (SE3) est un commutateur optique comprenant deux entrées et deux sorties, une sortie délivrant le signal optique sélectionné (WS), l'autre sortie délivrant un signal optique non sélectionné (WU) résultant de la non sélection du premier signal de porteuse (W1) ou de la non sélection du deuxième signal de porteuse (W2),
- ledit nœud optique (ON1) comprenant en outre un premier autre commutateur optique (SE4) comprenant deux entrées et deux sorties, une entrée acceptant la fourniture du signal optique de sortie (TS), l'autre entrée acceptant la fourniture du signal optique non sélectionné (WU), une sortie délivrant un signal optique de sortie principal (TSM), l'autre délivrant un signal optique de sortie protecteur (TSP),
et en réaction à l'occurrence d'un événement de défaillance sur le trajet de lumière principal, le nœud optique (ON1) est conçu pour :
- configurer le premier autre commutateur optique de sorte que le signal optique de sortie principal (TSM) corresponde au signal optique non sélectionné (WU), et de sorte que le signal optique de sortie protecteur (TSP) corresponde au signal optique de sortie (TS),
- transmettre le signal optique de sortie principal (TSM) sur le trajet optique principal (M15),
- transmettre le signal optique de sortie protecteur (TSP) sur le trajet optique protecteur (P15).

9. Nœud optique (ON1) selon l'une quelconque des revendications 4 à 8,
- dans lequel le dispositif sélecteur de deuxième longueur d'onde de porteuse (SE6) est un commutateur optique comprenant deux entrées et une entrée,
- ledit nœud optique (ON1) comprenant en outre un deuxième autre commutateur optique (SE5) comprenant deux entrées et une sortie, l'une desdites entrées acceptant la fourniture d'un signal optique d'entrée principal (RSM) reçu sur le trajet optique principal (M15), l'autre desdites entrées acceptant la fourniture d'un signal optique d'entrée protecteur (RSP), ladite sortie délivrant un signal optique de réception sélectionné (SRS), le signal optique de réception sélectionné (SRS) résultant de la sélection du signal optique d'entrée principal (RSM) ou de la sélection du signal optique d'entrée protecteur (RSP),
et en réaction à l'occurrence d'un événement de défaillance sur le trajet de lumière principal, le nœud optique (ON1) est conçu pour :
- configurer le deuxième autre commutateur optique (SE5) pour sélectionner le signal optique d'entrée protecteur (RSP) pour délivrer le signal optique de réception sélectionné (SRS).

10. Nœud optique (ON1) selon l'une quelconque des revendications 4 à 9, dans lequel la première longueur d'onde de porteuse correspond à la troisième longueur d'onde de porteuse, et la deuxième longueur d'onde de porteuse correspond à la quatrième longueur d'onde de porteuse.
